(19) Europäisches Patentamt
European Patent Office
Office européen des brevets

(11) **EP 3 645 357 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **18728343.7**

(22) Anmeldetag: **28.05.2018**

(51) Int Cl.:
**B60T 13/74** *(2006.01)*

(86) Internationale Anmeldenummer:
**PCT/EP2018/063911**

(87) Internationale Veröffentlichungsnummer:
**WO 2019/001868 (03.01.2019 Gazette 2019/01)**

(54) **VERFAHREN UND EINE VORRICHTUNG ZUM BETREIBEN EINER AUTOMATISIERTEN FESTSTELLBREMSE**

METHOD AND DEVICE FOR OPERATING AN AUTOMATED PARKING BRAKE

PROCÉDÉ ET DISPOSITIF POUR FAIRE FONCTIONNER UN FREIN DE STATIONNEMENT AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017 DE 102017210893**

(43) Veröffentlichungstag der Anmeldung:
**06.05.2020 Patentblatt 2020/19**

(73) Patentinhaber: **Robert Bosch GmbH**
**70442 Stuttgart (DE)**

(72) Erfinder:
• **WOLFF, Helmut**
**74199 Untergruppenbach (DE)**
• **MANNHERZ, Edith**
**74189 Weinsberg (DE)**

(56) Entgegenhaltungen:
**DE-A1-102005 011 267     DE-A1-102016 208 583**

EP 3 645 357 B1

## Beschreibung

Die vorliegende Erfindung betrifft ein Verfahren zum Betreiben einer automatisierten Feststellbremse für ein Kraftfahrzeug mit wenigstens einer Bremsvorrichtung mit einem Bremskolben, wobei die Feststellbremse den Bremskolben zwischen einer bremsmomentfreien Ruheposition und einer bremsmomentbeaufschlagten Bremsposition in Bezug auf eine Bremsscheibe mittels eines Aktuators verstellt, wobei während eines Lösevorgangs der Feststellbremse ein Referenzpunkt ermittelt wird, an welchem der Bremskolben in einer im Wesentlichen bremsmomentfreien Position zwischen dessen Ruheposition und Bremsposition lokalisiert ist, wobei das Verfahren dadurch gekennzeichnet ist, dass eine Abschätzung des Referenzpunktes unter Berücksichtigung einer Extrapolation einer den Lösevorgang beschreibenden Größe erfolgt.

## Stand der Technik

Aus dem heutigen Stand der Technik sind automatische Parkbremsen bekannt, welche ein Fahrzeug dauerhaft im Stillstand halten können. Des Weiteren ist bekannt, dass ein Fahrzeug auch bei höheren Geschwindigkeiten mittels der Parkbremssteller verzögert werden kann, wenn beispielsweise die hydraulische Bremsanlage ausgefallen ist und der Fahrer am Parkbremstaster zieht. Mit neuen Funktionen, welche bei kleinen Geschwindigkeiten auch automatisierte Fahrmanöver (wie z.B. hochautomatisierte Ein-/Ausparkvorgänge) erlauben, werden automatisierte Parkbremsen zunehmend auch als Rückfallebene für jegliche hydraulische Fehler benutzt. Da eine automatisierte Parkbremse im Vergleich mit einem hydraulischen Bremsaktuator sehr lange braucht, bis eine Bremskraft wirksam ist (aufgrund des Leerweges/Lüftspiels, des Parkbremsstellers, der für den Fahrbetrieb eingestellt wird um die hydraulische Bremsanlage nicht zu beeinflussen), besteht die Möglichkeit diesen Leerweg vor dem Start einer Funktion, welche die Parkbremse als Rückfallebene nutzen möchte, zu verkürzen. Dafür ist zum einen eine sehr genau Wegschätzung des Weges des Parkbremsstellers notwendig, zum anderen muss ein Referenzpunkt (beispielweise der sogenannte "Touch-Point" -das ist beim Zuspannen der Punkt an dem die Leerlaufphase in den Klemmkraftaufbau übergeht, beim Lösen entsprechend analog), bestimmt werden.

Aus dem Stand der Technik ist beispielsweise die Patentanmeldung DE 10 2016 208 583 A1 bekannt. Diese Schrift betrifft ein Verfahren zum Betreiben einer automatisierten Feststellbremse für ein Kraftfahrzeug mit wenigstens einer Bremsvorrichtung wobei die Feststellbremse wenigstens zwei Zustände einnehmen kann, wobei in einem ersten Zustand keine Klemmkraft mittels der Feststellbremse aufgebaut wird, und in einem zweiten Zustand eine Klemmkraft mittels der Feststellbremse aufgebaut wird, wobei ein Übergangspunkt den Übergang zwischen den zwei Zuständen definiert, ist dadurch gekennzeichnet, dass eine Identifikation des Übergangspunktes während eines Lösevorgangs der Feststellbremse erfolgt. Weiter betrifft die Erfindung ein entsprechend eingerichtetes Steuergerät sowie eine zugehörige Feststellbremse.

Aus dem Stand der Technik ist weiterhin die Patentanmeldung DE 10 2005 011 267 A1 bekannt. Diese Schrift betrifft ein Verfahren sowie ein Regelsystem zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), bei der ein Zusammenhang der Aktuatorposition und der Spannkraft besteht und bei dem mittels eines Spannkraftsensors sowie eines Lagesensors gemessene Werte der Spannkraft sowie der Aktuatorposition ermittelt werden, wobei ein Wert der Aktuatorposition ermittelt wird, der dem Anlegen der ersten Reibfläche an die zweite Reibfläche entspricht. Um laufend aktuelle Schätzwerte des Anlegepunktes ohne Zeitverzögerungen zur Verfügung zu stellen, um insbesondere den Anlegepunkt auch dann nachzuführen, wenn die Bremsbeläge während einer Bremsung nicht vernachlässigbar verschleißen, sieht die Schrift eine Kombination mehrerer Merkmale vor.

Nach heutigem Stand der Technik wird bei der Ermittlung des Übergangspunktes häufig auf die Strom- und Spannungsmessung der Parkbremssteller zurückgegriffen. Problemtisch hierbei ist, dass in Abhängigkeit von Temperatur und Spannung die Stromverläufe sehr unterschiedlich sein können, insbesondere im nichtlinearen Bereich um den eigentlichen Touch-Point. Gerade bei hohen Spannungen ergibt sich zusätzlich das Problem, dass die Parkbremssteller relativ schnell sind und daher komplizierte Berechnungsformeln zur Bestimmung des Knickpunktes schlicht aufgrund langer Rechenzeit den Punkt zu spät erkennen. Zudem können momentan bekannte Touch-Point-Erkennungsverfahren den Touch-Point nur im Moment des Durchfahrens oder aber nur nachträglich berechnen.

## Offenbarung der Erfindung

Vorteilhaft ermöglicht hingegen das erfindungsgemäße Verfahren eine Ermittlung des Touch-Points, welche auf sehr einfachen Rechenvorschriften basiert und damit sehr schnell berechnet werden kann. Zudem kann der Touch-Point beim Lösen berechnet werden, noch bevor die Klemmkraft des Stellers vollständig abgebaut ist. Je nach Genauigkeitsanforderung kann dieses Verfahren also dazu benutzt werden den Touch-Point zu bestimmen, oder um den Bereich in welchem der Touch-Point liegt einzugrenzen.

Ermöglicht wird dies gemäß der Erfindung durch die in den unabhängigen Patentansprüchen angegebenen Merkmale. Weitere Ausgestaltungen der Erfindung sind Gegenstand von Unteransprüchen.

Das erfindungsgemäße Verfahren zum Betreiben einer automatisierten Feststellbremse für ein Kraftfahrzeug mit wenigstens einer Bremsvorrichtung mit einem Bremskolben, wobei die Feststellbremse den Bremskolben zwischen einer bremsmoment-freien Ruheposition und einer bremsmoment-beaufschlagten Bremsposition in Bezug auf eine Bremsscheibe mittels eines Aktuators verstellt, wobei während eines Lösevorgangs der Feststellbremse ein Referenzpunkt ermittelt wird, an welchem der Bremskolben in einer im Wesentlichen bremsmomentfreien Position zwischen dessen Ruheposition und Bremsposition lokalisiert ist, ist dadurch gekennzeichnet, dass eine Abschätzung des Referenzpunktes unter Berücksichtigung einer Extrapolation einer den Lösevorgang beschreibenden Größe erfolgt.

Hierunter wird verstanden, dass ein Zustand der Feststellbremse ermittelt wird, der eine definierte - an den Referenzpunkt gestellte -Bedingung erfüllt. Bspw. kann eine bestimmte Position als Referenzpunkt verstanden werden, in welcher die Feststellbremse eine bestimmte Wirkung entfaltet, bspw. ein kraftfreies Anliegen des Bremskolbens an der Bremsscheibe. Es erfolgt jedoch durch die vorgeschlagene Lösung nicht eine Überprüfung ob bspw. zu einem bestehenden Zeitpunkt diese Bedingung erfüllt ist oder wurde. Vielmehr erfolgt eine Abschätzung zu welchem zukünftigen Zeitpunkt diese Bedingung erfüllt sein wird. Es erfolgt daher im Wesentlichen keine exakte Ermittlung einer tatsächlichen Erfüllung, sondern vielmehr eine gröbere Abschätzung einer möglichen zukünftigen Erfüllung. Hierfür wird eine Größe analysiert, welche den Lösevorgang beschreibt, wie bspw. der Kraftverlauf, der Motorstrom und/oder die Zeit der Ansteuerung des Aktuators. Bspw. kann auf diese Weise ein Bremskontaktpunkt ermittelt werden. Als Bremskontaktpunkt ist die Position der Feststellbremse (bspw. des Bremskolbens) zu verstehen, an der die Feststellbremse (bspw. der Bremskolben) im Wesentlichen kraftfrei und spielfrei an der Bremsscheibe anliegt. Im Rahmen der Ausführungen sollen die Begriffe Bremsmoment und Klemmkraft gleichbedeutend verstanden werden. Die Abschätzung des Referenzpunktes kann dabei mittels einer direkten Abschätzung des Zeitpunktes oder der Zeitspanne erfolgen, wann der Referenzpunkt (bspw. Bremskontaktpunkt) erreicht wird. Es kann aber auch die absolute oder relative Position des Referenzpunktes (bspw. Bremskontaktpunktes) abgeschätzt werden. Hieraus kann wiederum im Vergleich mit der ermittelten und/oder bekannten aktuellen Position und (extrapolierten) Bewegung abgeschätzt werden, wann der Bremskontaktpunkt erreicht wird.

Vorteilhaft keine eine solche Extrapolation mittels einfacher Rechenvorschriften ermöglicht werden. Hierdurch kann Rechenkapazität eingespart werden. Weiterhin kann dadurch auch eine sehr schnelle Berechnung erfolgen. Weiterhin ermöglich die Extrapolation eine frühzeitige Abschätzung des Referenzpunktes bereits im Vorfeld bevor der Steller die tatsächliche Position erreicht. Hierdurch kann rechtzeitig Einfluss auf die Steuerung der Feststellbremse genommen werden. Bspw. kann eine rechtzeitige Abschaltung der Steuerung erfolgen, um eine Positionierung sehr nahe an dem gewünschten Referenzpunkt zu ermöglichen.

In einer vorteilhaften Ausführungsform ist das Verfahren dadurch gekennzeichnet, dass eine Abschätzung des Referenzpunktes unter Berücksichtigung einer linearen Extrapolation der den Lösevorgang beschreibenden Größe erfolgt.

Hierunter wird verstanden, dass mittels einer linearen Approximation der Lösevorgang angenähert wird, um diesen vereinfacht modellieren zu können. Hierzu wird eine Linearität der den Lösevorgang beschreibenden Größe angenommen. Diese kann bspw. auch nur über einen bestimmten Bereich festgelegt werden. Darauf aufbauen, erfolgt eine mathematische Modellierung der aktuellen Situation und lineare Fortschreibung, um den gewünschten Referenzpunkt zu ermitteln. Vorteilhaft kann eine solche lineare Extrapolation mittels einfacher Rechenvorschriften umgesetzt werden. Hierdurch sind für die Berechnung lediglich geringe Rechenkapazitäten notwendig. Des Weiteren ist eine schnelle Berechnung möglich.

In einer möglichen Ausgestaltung ist das Verfahren dadurch gekennzeichnet, dass die den Lösevorgang beschreibende Größe den Klemmkraftabbau repräsentiert.

Hierunter wird verstanden, dass aus der analysierte Größe in direkter oder indirekter Weise die Klemmkraft ableitbar ist. Die analysierte Größe steht daher in Bezug mit der Funktion (bspw. zeitlichen Verlauf) des Klemmkraftabbaus. Um dies zu ermöglichen können natürlich auch mehrere Größen bzw. Faktoren berücksichtigt werden. In vorteilhafter Weise kann durch die Wahl einer geeigneten zu analysierenden Größe eine direkte Kopplung mit dem den relevanten technischen Effekt ermöglicht werden, bspw. das Positionierung der Feststellbremse in einer Position in der eine definierte, bzw. bremsmomentfreie Betriebsstellung der Parkbremse vorliegt.

In einer bevorzugten Ausführung ist das Verfahren dadurch gekennzeichnet, dass der Lösevorgang durch wenigstens ein Wertepaar zweier Größen beschrieben wird, wobei insbesondere als Wertepaar die Größen berücksichtigt werden

- ein Stromwert der Feststellbremse und
- eine Größe der Feststellbremse, die die aktuelle Position des Bremskolbens beschreibt.

Hierunter wird verstanden, dass die den Lösevorgang beschreibende Größe durch mehrere Größen gebildet wird, bspw. durch die Auslenkung der Feststellbremse und den zugeordneten Stromwert. Das aus den zwei Größen gebildete Wertepaar ist damit als Stützwert zu verstehen, welcher bspw. den aktuellen Zustand des Lösevorgangs vollständig beschreibt. Die Auslenkung der Feststellbremse kann die Position einer Komponente, bspw. der Bremskolbens oder der Spindelmutter sein. Bspw. kann die Position auch über den Drehwinkel des Aktuators oder die Ansteuerzeit ermittelt werden. Vorteilhaft kann durch die Verwendung der beschriebenen Größen eine sehr genaue Ermittlung des Zustands der Feststellbremse, bspw. der Position des Bremskolbens; erfolgen

In einer alternativen Weiterbildung ist das Verfahren dadurch gekennzeichnet, dass als Wertepaar die folgenden Größen berücksichtigt werden: ein Stromwert der Feststellbremse und ein Zeitwert einer Ansteuerung des Aktuators

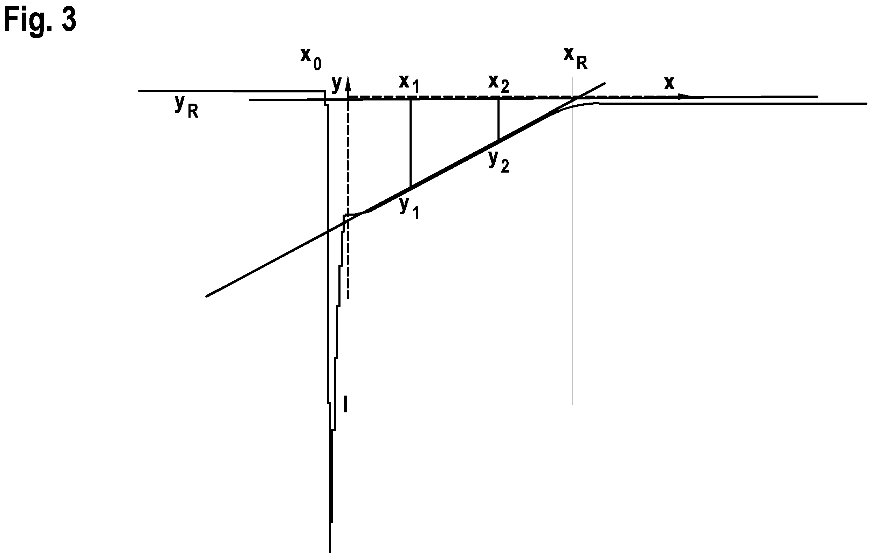

Hierunter ist zu verstehen, dass aus den Größen Strom und Zeit ein Wertepaar gebildet wird. Bspw. der Stromwert der zu einem bestimmten Zeitpunkt vorliegt. Vorteilhaft kann hierdurch auf bereits verfügbare Messgrößen zurückgegriffen werden. Es sind daher keine zusätzlichen Sensoren notwendig. Dies reduziert den Aufwand, die Komplexität und die Kosten des Systems. Zur Illustration ist eine Skizze mit zwei Stützpunktpaaren für die Größen Stromwert und Zeit in Abbildung 3 gezeigt.

Explizit sei erwähnt, dass das Wertepaar nicht nur die zuvor genannten Größen berücksichtigt, sondern auch direkt aus den genannten Größen gebildet sein kann, bzw. aus diesen bestehen kann.

In einer vorteilhaften Ausgestaltung ist das Verfahren dadurch gekennzeichnet, dass zur Ermittlung des Wertepaars zu definierten Zeitwerten die korrespondierenden Stromwerte ermittelt werden oder zu definierten Stromwerten die korrespondierenden Zeitwerte ermittelt werden.

Hierunter wird verstanden, dass Werte einer Größe definiert werden, zu welchen die Werte der anderen Größe ermittelt, insbesondere direkt gemessen werden. Bspw. können Zeitwerte definiert werden, zu welchen die korrespondierenden Stromwerte gemessen werden sollen. Die Zeitwerte werden hierbei vorteilhaft in Abhängigkeit des Einschaltpeaks gewählt. Das heißt die Zeitwerte werden so gewählt, dass diese bspw. nicht im nicht-linearen Bereich des Einschaltpeaks liegen, sondern im danach folgenden linearen Bereich des regulären Klemmkraftabbaus. Durch die so definierten Zeitwerte, kann eine sehr einfache Ermittlung der Stromwerte durchgeführt werden mit einer für viele Fälle ausreichenden Genauigkeit. In einer alternativen Ausführung kann auch zu definierten Stromwerten die jeweiligen Zeitwerte ermittelt werden. Dies ermöglicht eine sehr hohe Genauigkeit aufgrund der bestehenden Korrelation (der definierten Stromwerte) zum Kraftabbau. Dieses Vorgehen ermöglicht auch eine Berücksichtigung von Umgebungsbedingungen, welche evtl. den Klemmkraftabbau schneller oder langsamer verlaufen lassen. Dies ermöglicht weiterhin die Vermeidung von Stromwerten, die im nicht-linearen Bereich liegen. Zusätzlich kann - bspw. bei der Definition der Stromwerte - ein möglicher Vordruck berücksichtigt werden. Vorteilhaft wird vordruckabhängig niedrigerer Stromwerte definiert. Hierdurch kann bspw. berücksichtigt werden, dass bei einem hohen Vordruck bspw. ein bestimmter Stromwert gar nicht mehr erreicht wird.

In einer möglichen Ausführung ist das Verfahren dadurch gekennzeichnet, dass die Abschätzung des Referenzpunktes unter Berücksichtigung einer linearen Extrapolation zweier Wertepaare der den Lösevorgang beschreibenden Größen erfolgt.

Hierunter wird verstanden, dass zwei Wertepaar ermittelt werden (bspw. zwei gemessene Stromwerte zu zwei definierten Zeitpunkten). Basierend auf diesen Wertepaaren wird eine lineare Extrapolation durchgeführt. Mathematisch kann diese lineare Extrapolation durch das Aufstellen einer Geradengleichung modelliert werden. Vorteilhaft kann hiermit eine sehr einfache Berechnung der Linearisierung erfolgten. Auf diese Weise kann mit geringem Aufwand und Ressourcen eine Approximation des weiteren d.h. zukünftigen Lösevorgangs erfolgen.

In einer bevorzugten Weiterbildung ist das Verfahren dadurch gekennzeichnet, dass als Referenzpunkt die Position angesetzt wird, an welcher die Extrapolation der den Lösevorgang beschreibenden Größe einen definierten Referenzwert aufweist.

Hierunter wird verstanden, dass der Referenzpunkt mittels Extrapolation einer Größe erfolgt, wobei der Referenzpunkt genau dort angenommen wird, wo die Größe einen definierten Wert erreicht. Im Sinne der bisherigen Ausführung zur Abschätzung des Referenzpunkt kann bspw. das Wertepaar Strom/Zeit linear extrapoliert werden, bis der Stromwert einen spezifischen Wert erreicht. Der dem Stromwert entsprechende Zeitpunkt könnte dann als Referenzpunkt definiert werden. Der definierte Referenzwert der Größe kann entweder einen tatsächlichen Wert oder den Wert Null besitzen. Der Wert Null würde in der graphischen Beschreibung der Linearisierung als Geraden, einem Nulldurchgang bspw. der X-Achse entsprechen. Die Verwendung eines definierten Referenzwertes ermöglicht eine hohe Genauigkeit bei der Ermittlung des jeweils gewünschten Referenzpunkts während des Lösevorgangs. Weiterhin ermöglicht dieses Vorgehen auch eine hohe Variabilität durch die Definition spezifische geänderter Referenzwerte je nach Bedarfsfall.

In einer alternativen Ausführungsform ist das Verfahren dadurch gekennzeichnet, dass die Abschätzung des Referenzpunktes unter Berücksichtigung eines Leerlaufstroms des Aktuators erfolgt, wobei insbesondere der Leerlaufstrom im Vorfeld der Abschätzung des Referenzpunktes bestimmt wird durch

- einen definierten festen Parameter und/oder
- einen gemessenen Parameter und/oder

- einen definierten variablen Parameter, wobei insbesondere auf Basis von unterschiedlichen ermittelten Betriebsbedingungen ein anderer definierter Parameter berücksichtigt wird.

Hierunter wird verstanden, dass bei der Ermittlung des Referenzpunktes auch der Leerlaufstrom berücksichtigt wird. Bspw. kann dieser Leerlaufstrom mittels des zuvor beschriebenen Referenzwertes in die Ermittlung integriert werden. Hierfür wird bspw. der Referenzwert, welcher den Nulldurchgang der approximierten Geraden (Linearisierung) beschreibt, auf den angenommenen Leerlaufstrom festgelegt. Der Referenzwert kann dafür als fixer Wert vorab definiert worden sein. Alternativ oder in Kombination kann der Referenzwert auch einem gemessenen Parameter entsprechen, bspw. dem tatsächlich gemessenen Leerlaufstrom beim letzten Lösevorgang. In besonders vorteilhafter Weise wird der Leerlaufstrom über eine Vielzahl der vergangenen Applikationen gelernt. Bspw. wird hierfür über die letzten 100 Applikationen der Feststellbremse der jeweilige Leerlaufstrom ermittelt und der Durschnitt (oder ein gewichteter Durchschnitt) dazu gebildet. Auch ist möglich, dass der Referenzwert variabel definiert wird. Das heißt, es wird bspw. ein sogenanntes Look-up-Table definiert, in welchem der Wert für den Referenzwert für unterschiedliche Betriebsbedingungen definiert wird. Entsprechend der aktuell vorliegenden Betriebsbedingung wird der jeweilige Referenzwert aus der Tabelle entnommen und bei der Berechnung verwendet. Vorteilhaft ermöglicht dieser Ansatz eine verbesserte Genauigkeit und Variabilität bei der Ermittlung des Referenzpunktes - und weiterhin eine einfache Berechnung zu ermöglichen.

In einer vorteilhaften Ausgestaltung ist das Verfahren dadurch gekennzeichnet, dass nach einem vollständigen Abbau des Bremsmoments ein tatsächlich bestehender Leerlaufstrom gemessen wird, und insbesondere eine Korrektur des abgeschätzten Referenzpunktes vorgenommen wird, wenn der im Vorfeld der Abschätzung des Referenzpunktes bestimmte Leerlaufstrom von dem tatsächlich bestehenden Leerlaufstrom abweicht.

Hierunter wird verstanden, dass eine Validierung des angenommenen Leerlaufstromwertes erfolgt. Um diese Validierung durchführen zu können, wird der tatsächlich vorliegende Leerlaufstromwert im Rahmen des Lösevorgangs der Feststellbremse ermittelt. Wenn der angenommene Leerlaufstromwert mehr als ein definiertes Maß von dem ermittelten Leerlaufstromwert abweicht, erfolgt eine Korrektur. Diese Korrektur kann den angenommenen Leerlaufstromwert, als auch den approximierten Referenzpunkt umfassen. Hierdurch erfolgt eine Verbesserung der Abschätzung des Referenzpunktes.

Da der tatsächliche Leerlaufstrom, aber erst in der Leerlaufphase ermittelt werden kann, ist damit eine sehr frühe Detektion des Referenzpunktes nicht möglich, jedoch ist aufgrund der nachträglichen Korrektur bspw. eine genauere Positionierung beim Wiederansteuern des Parkbremsstellers an den Referenzpunkt möglich.

In einer möglichen Ausführungsform ist das Verfahren dadurch gekennzeichnet, dass zur Abschätzung des Referenzpunktes mehrere Extrapolationen einer den Lösevorgang beschreibenden Größe erfolgen, insbesondere, dass ein Mittelwert mehrerer linearer Extrapolationen zweier Wertepaare der den Lösevorgang beschreibenden Größen gebildet wird.

Hierunter wird verstanden, dass graphisch gesehen nicht nur eine extrapolierende Gerade gebildet wird, sondern dass mehrere, extrapolierende Geraden ermittelt werden. Jede der Geraden kann wie bereits zuvor beschrieben gebildet werden, bspw. mittels zweier Stromwerte des Aktuators zu zwei definierten Zeitwerten.

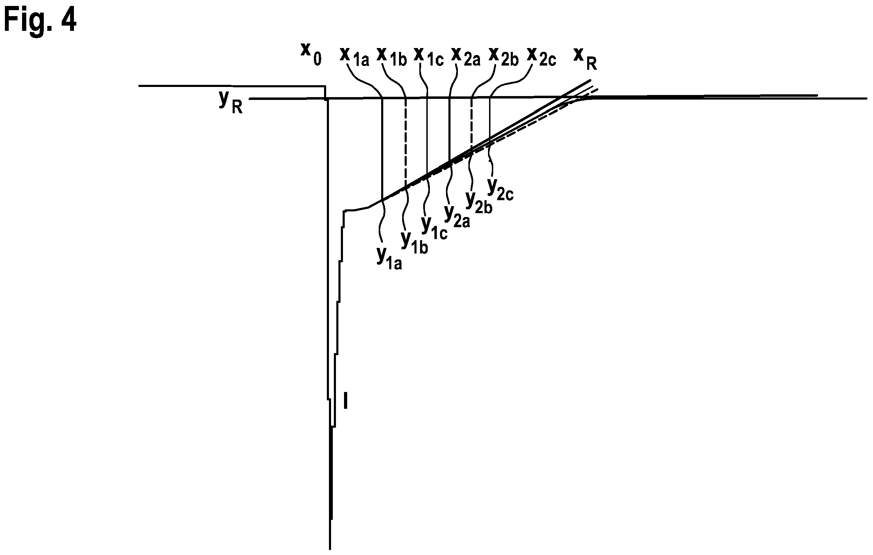

Für zwei Geraden werden bevorzugt unterschiedliche Zeitwerde definiert, so dass jeweils unterschiedliche Wertepaare vorliegen. Entsprechend den unterschiedlichen Geraden erhält man unterschiedliche Referenzpunkte. Der approximierte Referenzpunkt für den Lösevorgang kann als Mittelwert der ermittelten Referenzpunkt definiert werden. Alternativ ist es selbstverständlich auch denkbar, dass eine Gewichtung der ermittelten Referenzpunkte oder sogar eine Gewichtung der jeweiligen Wertepaare erfolgt (bspw. auf Basis einer Priorisierung / Gewichtung entsprechender Zeitwerte). Durch die Berücksichtigung mehrerer Extrapolationen wird die Genauigkeit des Schätzverfahrens vorteilhaft verbessert. Dieses Verfahren hat den Vorteil, dass wenn einer der Stützpunkte einen Ausreißer aufweist, dies nicht zu einer falschen Berechnung des Touch-Points führt. Zur Illustration ist eine Skizze mit drei Stützpunktpaaren in Abbildung 4 gezeigt.

In einer bevorzugten Ausgestaltung ist das Verfahren dadurch gekennzeichnet, dass der abgeschätzte Referenzpunkt als Eingangsgröße für ein Berechnungsverfahren zur exakten Ermittlung des Referenzpunktes eingesetzt wird.

Hierunter wird verstanden, dass das beschriebene Schätzverfahren bspw. zur ungefähren Eingrenzung des tatsächlichen Bremskontaktpunktes eingesetzt wird und im Anschluss und/oder auf Basis des Schätzverfahrens ein detailliertes Berechnungsverfahren des Bremskontaktpunktes erfolgt. Die Ermittlung des Referenzpunktes erfolgt damit durch ein zweigeteiltes Ermittlungsverfahren. Zunächst erfolgt eine Abschätzung. In dem abgeschätzten, d.h. in dem zu erwarteten Bereich in dem der Referenzpunkt liegen wird, wird im Anschluss ein hochgenaues Berechnungsverfahren eingesetzt. Durch die Verwendung des einfachen Abschätzverfahrens im Vorfeld kann ein optimierter Einsatz der Rechnerkapazitäten ermöglich werden, da das Abschätzverfahren lediglich wenige Ressourcen belegt. Die berechnungsintensive genaue Ermittlung des Referenzpunktes muss entsprechend nicht über den gesamten Bereich des Lösevorgangs durchgeführt werden, sondern nur in dem engen Bereich der abgeschätzten ungefähren Position des Referenzpunktes.

Das Verfahren sieht vorteilhaft weiterhin die Speicherung des Referenzpunktes vor für eine spätere Verwendung bei der Steuerung der Parkbremse. Weiterhin sieht das Verfahren eine Steuerung der Feststellbremse auf Basis des abgeschätzten und/oder ermittelten Referenzpunktes, bzw. Bremskontaktpunktes vor. Hierbei kann bspw. eine Positionierung des Bremskolbens an dem Referenzpunkt erfolgen. Auch ist eine Positionierung mit einem Offset möglich. Eine Positionierung kann bspw. bei Aktivierung von automatisierten Fahrfunktionen, bspw. eines automatisierten Einparkassistenten erfolgten.

Erfindungsgemäß ist weiterhin eine Vorrichtung vorgesehen, die eingerichtet ist, das beschriebene Verfahren auszuführen.

Hierunter wird verstanden, dass die Vorrichtung dazu ausgebildet, das heißt eingerichtet ist und/oder Mittel aufweist, bei bestimmungsgemäßem Gebrauch ein wie zuvor beschriebenes Verfahren durchzuführen. Als Vorrichtung kann bspw. ein Steuergerät und/oder ein Speicherelement und/oder ein Bedienelement angesehen werden. Also beispielsweise ein ESP-Steuergerät oder APB-Steuergerät, welches eine Steuerung und oder eine Abschätzung des Referenzpunktes unter Berücksichtigung einer Extrapolation einer den Lösevorgang beschreibenden Größe durchführt.

Erfindungsgemäß ist weiterhin ein Computerprogramm vorgesehen, das dazu eingerichtet ist, das beschriebene Verfahren auszuführen sowie ein maschinenlesbares Speichermedium, auf dem das Computerprogramm gespeichert ist.

**Ausführungsformen**

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:

Fig. 1 eine schematische Schnittansicht einer Bremsvorrichtung mit einer automatischen Feststellbremse in "motor on caliper" Bauweise; und

Fig. 2 einen Verfahrensablauf entsprechend einer Ausführungsform, und

Fig. 3 eine Darstellung des Motorstroms des Aktuators über die Zeit gemäß einer Ausführungsform, und

Fig. 4 eine Darstellung des Motorstroms des Aktuators über die Zeit gemäß einer weiteren Ausführungsform.

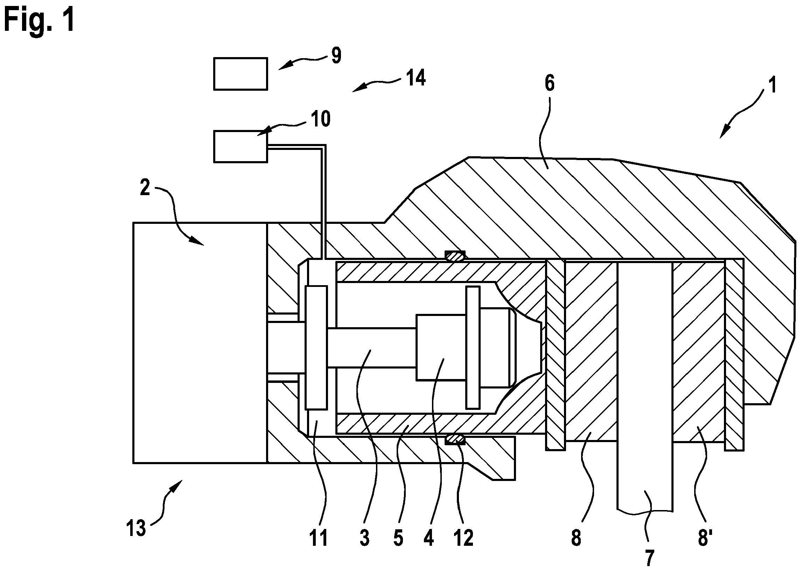

Fig. 1 zeigt eine schematische Schnittansicht einer Bremsvorrichtung 1 für ein Fahrzeug. Die Bremsvorrichtung 1 weist dabei eine automatisierte Feststellbremse 13 auf (auch automatische Feststellbremse oder automatisierte Parkbremse, kurz APB genannt), die mittels eines elektromechanischen Aktuators 2 (Elektromotor), eine Klemmkraft zum Festsetzen des Fahrzeugs ausüben kann. Ein Bremssystem umfasst häufig zwei Feststellbremsen 13 jeweils mit einem elektromechanischen Aktuator 2. Die Feststellbremsen sind häufig an der Hinterachse angeordnet, wobei jeweils eine Feststellbremse 13 an der linken sowie rechten Bremsvorrichtung 1 positioniert ist.

Der elektromechanische Aktuator 2 der dargestellten Feststellbremse 13 treibt hierfür eine in einer axialen Richtung gelagerte Spindel 3, insbesondere eine Gewindespindel 3, an. An ihrem dem Aktuator 2 abgewandten Ende ist die Spindel 3 mit einer Spindelmutter 4 versehen, die im zugespannten Zustand der automatisierten Feststellbremse 13 an dem Bremskolbens 5 anliegt. Die Feststellbremse 13 übertragt auf diese Weise eine Kraft auf die Bremsbeläge 8, 8', bzw. die Bremsscheibe 7. Die Spindelmutter liegt dabei an einer inneren Stirnseite des Bremskolbens 5 (auch Rückseite des Bremskolbenbodens oder innerer Kolbenboden genannt) an. Die Spindelmutter 4 wird bei einer Drehbewegung des Aktuators 2 und einer resultierenden Drehbewegung der Spindel 3 in der axialen Richtung verschoben. Die Spindelmutter 4 und der Bremskolben 5 sind in einem Bremssattel 6 gelagert, der eine Bremsscheibe 7 zangenartig übergreift.

Zu beiden Seiten der Bremsscheibe 7 ist jeweils ein Bremsbelag 8, 8' angeordnet. Im Fall eines Zuspannvorgangs der Bremsvorrichtung 1 mittels der automatisierten Feststellbremse 13 dreht sich der Elektromotor (Aktuator 2), woraufhin die Spindelmutter 4 sowie der Bremskolben 5 in der axialen Richtung auf die Bremsscheibe 7 zubewegt werden, um so eine vorbestimmte Klemmkraft zwischen den Bremsbelägen 8, 8' und der Bremsscheibe 7 zu erzeugen. Aufgrund des Spindelantriebs und der damit verbundenen Selbsthemmung wird eine bei der Feststellbremse 13 mittels einer Ansteuerung des Elektromotors erzeugten Kräften auch bei einer Beendigung der Ansteuerung weiter gehalten.

Die automatisierte Feststellbremse 13 ist bspw. wie abgebildet als Motor-on-Caliper System ausgebildet und mit der Betriebsbremse 14 kombiniert. Man könnte die Feststellbremse 13 auch als in das System der Betriebsbremse 14 integriert ansehen. Sowohl die automatisierte Feststellbremse 13 als auch die Betriebsbremse 14 greifen dabei auf denselben Bremskolben 5 sowie denselben Bremssattel 6 zu, um eine Bremskraft auf die Bremsscheibe 7 aufzubauen. Die Betriebsbremse 14 besitzt jedoch einen separaten hydraulischen Aktuator 10, bspw. ein Fußbremspedal mit einem Bremskraftverstärker. Die Betriebsbremse 14 ist in Fig. 1 als hydraulisches System ausgestaltet, wobei der hydraulische Aktuator 10 durch die ESP-Pumpe oder einen elektromechanischen Bremskraftverstärker (bspw. Bosch iBooster) unterstützt oder durch diese umgesetzt werden kann. Auch weitere Ausführungsformen des Aktuators 10 sind denkbar, bspw. in Form einer sogenannten IPB (Integrated Power Brake), welche im Grundsatz ein Brake-by-Wire-System darstellt, bei welchem ein Plunger benutzt wird, um hydraulischen Druck aufzubauen. Bei einer Betriebsbremsung wird eine vorbestimmte Klemmkraft zwischen den Bremsbelägen 8, 8' und der Bremsscheibe 7 hydraulisch aufgebaut. Zum Aufbau einer Bremskraft mittels der hydraulischen Betriebsbremse 14 wird ein Medium 11, insbesondere eine im Wesentlich inkompressible Bremsflüssigkeit 11, in einen durch den Bremskolben 5 und den Bremssattel 6 begrenzten Fluidraum gepresst. Der Bremskolben 5 ist gegenüber der Umgebung mittels eines Kolbendichtring 12 abgedichtet.

Die Ansteuerung der Bremsaktuatoren 2 und 10 erfolgt mittels einer oder mehrere Endstufen, d.h. mittels eines Steuergeräts 9, bei dem es sich bspw. um ein Steuergerät eines Fahrdynamiksystems, wie ESP (elektronisches Stabilitätsprogramm) oder ein sonstiges Steuergerät handeln kann.

Bei einer Ansteuerung der automatisierten Feststellbremse 13 müssen zuerst der Leerweg bzw. das Lüftspiel überwunden werden, bevor eine Bremskraft aufgebaut werden kann. Als Leerweg wird bspw. der Abstand bezeichnet, den die Spindelmutter 4 durch die Rotation der Spindel 3 überwinden muss, um in Kontakt mit dem Bremskolben 5 zu gelangen. Als Lüftspiel wird der Abstand zwischen den Bremsbelägen 8, 8' und der Bremsscheibe 7 bei Scheibenbremsanlagen von Kraftfahrzeugen bezeichnet. Dieser Vorgang dauert in Bezug auf die Gesamtansteuerung, insbesondere bei der automatisierten Feststellbremse 13, in der Regel relativ lang. Am Ende einer derartigen Vorbereitungsphase sind die Bremsbeläge 8, 8' an die Bremsscheibe 7 angelegt und der Kraftaufbau beginnt bei einem weiteren Verfahren. Fig. 1 zeigt den Zustand des bereits überwundenen Leerwegs und Lüftspiels. Hierbei sind die Bremsbeläge 8, 8' an die Bremsscheibe 7 angelegt und sämtliche Bremsen, d.h. die Feststellbremse 13 als auch die Betriebsbremse 14, können bei einer folgenden Ansteuerung sofort eine Bremskraft an dem entsprechenden Rad aufbauen. Die Beschreibungen zu Lüftspiel gelten in analoger Weise auch für die Betriebsbremse 14, wobei jedoch aufgrund der hohen Druckaufbaudynamik die Überwindung eines Leerwegs einen geringeren Zeitaufwand darstellt als bei der Feststellbremse 13.

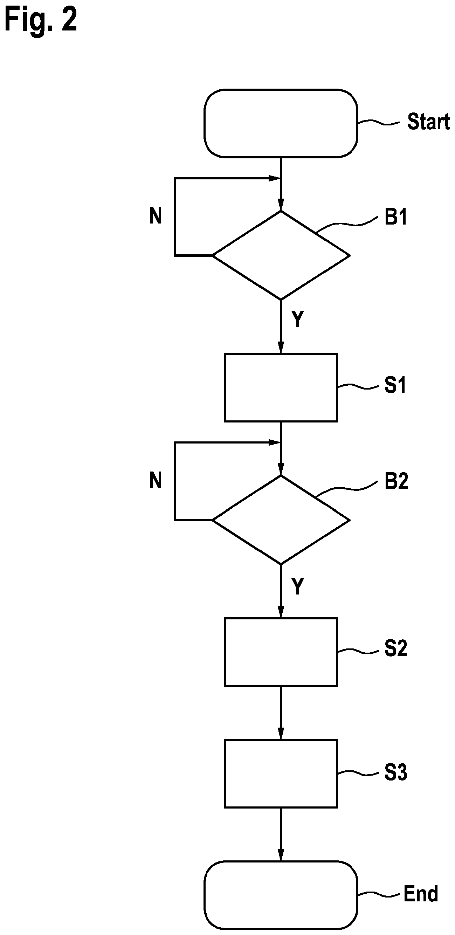

Figur 2 zeigt einen schematischen Verfahrensablauf entsprechend einer Ausführungsform die erste Ausführungsform. Hierzu wird beispielsweise der Bremskontaktpunkt mittels einer linearen Extrapolation von zwei Wertepaaren der Größen "Motorstrom" und "Zeit" ermittelt. Nach dem Start des Verfahrens, wird hierfür zunächst die Erfüllung einer ersten Bedingung (B1) überprüft. Diese Bedingung ist bspw. ob der aktuell gemessene Stromwert dem ersten festgelegten Stützwert entspricht. Ist dies der Fall (Y) wird das Verfahren fortgeführt und in einem ersten Verfahrensschritt (S1) der entsprechende Zeitwert gespeichert. Wird die Bedingung (B1) nicht erfüllt (N) wird weiter überprüft, ob eine Erfüllung der ersten Bedingung im weiteren Zeitablauf eintritt. Anschließend an die Speicherung des ersten Zeitwertes, wird die Erfüllung einer zweiten Bedingung (B2) überprüft. Diese Bedingung ist bspw. ob der aktuell gemessene Stromwert dem zweiten festgelegten Stützwert entspricht. Ist dies der Fall (Y) wird das Verfahren fortgeführt und in einem zweiten Verfahrensschritt (S2) der entsprechende Zeitwert gespeichert. Wird die Bedingung (B2) nicht erfüllt (N) wird weiter überprüft, ob eine Erfüllung der zweiten Bedingung im weiteren Zeitablauf eintritt. Anschließend an die Speicherung des zweiten Zeitwertes, erfolgt in einem nächsten Verfahrensschritt (S3) die Abschätzung des Referenzwertes. Hierzu wird bspw. für die beiden Stützwerte für welche die Zeitwerte ermittelt wurden eine lineare Extrapolation mittels der oben beschriebenen Formel durchgeführt und damit der Zeitwert für den Referenzpunkt ermittelt. Das Schätzverfahren endet hiermit. Auf Basis des ermittelten Zeitwertes des Referenzpunktes kann eine Steuerung der Feststellbremse erfolgten. Bspw. kann der Lösevorgang so beendet werden, dass - bspw. unter Berücksichtigung des Auslaufens des Aktuators - der Bremskolben kraftfrei und spielfrei am an der Bremsscheibe anliegt. Selbstverständlich kann der ermittelte Referenzpunkt auch gespeichert werden und bspw. im Rahmen eines späteren Positionierungsverfahrens des Bremskolbens eingesetzt werden.

Figur 3 zeigt eine schematische Darstellung des Motorstroms des Aktuators gemäß einer Ausführungsform. Hierbei wird bspw. für definierte Stromwerte der jeweilige Zeitwert ermittelt. Auf Basis zweier Wertepaare dieser Größe erfolgt eine lineare Extrapolation zur Abschätzung des Zeitpunktes an dem die Feststellbremse den Referenzpunkt erreicht. Die x-Achse zeigt hierbei den Zeitverlauf t und die y-Achse den Motorstrom I. Zum Zeitpunkt xo wird der Aktuator zum Lösen der Feststellbremse angesteuert. Hierdurch ergibt sich ein sogenannter Einschaltpeak. Im Anschluss reduziert sich der Stromverlauf in Analogie zum Kraftabbau über die Zeit. Beim Erreichen des ersten definierten Stromwertes $y_1$ wird der entsprechende Zeitpunkt $x_1$ ausgelesen und gespeichert. Im weiteren Verlauf wird beim Erreichen des zweiten definierten Stromwertes $y_2$ der entsprechende Zeitwert $x_2$ ausgelesen und gespeichert. Auf Basis dieser beiden Wertepaare erfolgt eine Berechnung des Zeitwertes $x_R$ zu dem der Referenzpunkt mit dem Stromreferenzwert $y_R$ voraussichtlich erreicht wird. Die Berechnung entspricht einer linearen Extrapolation entsprechend einer durch die Wertepaare aufgespannten Geraden. Der Referenzpunkt wird dann erreicht, wenn diese Gerade einen definierten Stromstärkewert erreicht, bspw. den Leerlaufstromwert $I_0$. Zur Verbildlichung wurde dieser Leerlaufstromwert $I_0$ als horizontale Achse $y_R$ in die Fig. 3 eingezeichnet. Der Referenzpunkt $y_R/x_R$ entspricht dem Schnittpunkt dieser Achse mit der durch die Wertepaare aufgespannten Geraden.

Wie beschrieben, erfolgt die Linearisierung des Stromverlaufs in diesem Beispiel mit Hilfe von zwei Stützpunkten. Hierfür kann man entweder zwei Zeitpunkte wählen (z.B. in Abhängigkeit des Einschaltpeaks) oder aber zwei Stromwerte. Je nach Parkbremsteller sind hier unterschiedliche Werte sinnvoll. Zur Veranschaulichung wird folgendes Beispiel beschrieben: Beispielhaft werden als festgelegte Stromwerte 3 A für $y_1$ und 1,5 A für $y_2$ gewählt. Der Leerlaufstrom liegt in diesem Beispiel bei 0,5 A, auch dieser Wert ist Steller-spezifisch zu wählen. Für die x-Werte der Stützpunkte werden $x_1=0,2$ s und $x_2=0,4$ s als ermittelte Zeitwerte angenommen. Die Steigung m einer Geraden lässt sich mittels zwei bekannten Punkten sehr einfach berechnen (Formel 1):

$$m = (y2 - y1)/(x2 - x1)=(-1,5\,A - (-3\,A))/(0,4\,s - 0,2\,s)= 7,5A/s$$

Formel 1: Steigung einer Geraden

Die allgemeine Funktion einer Geraden ist wie folgt(Formel 2):

$$y = m * x + c$$

Formel 2: Geraden Gleichung

Mit bekannter Steigung, kann mittels einem der beiden Stützpunkte der Off-Set c der Geradengleichung berechnet werden (Formel 3):

$$c = y - m * x = -3\,A - 7,5A/s* 0,2\,s = -4,5\,A$$

Formel 3: Off-Set c Berechnung

Wenn die Geradengleichung bekannt ist, kann mit dem bekannten Leerlaufstromwert, der Zeitpunkt des Touch-Points berechnet werden (Formel 4):

$$x = (y - c)/m=(-0,5\,A - (-4,5\,A))/(7,5A/s) = 0,53\,s$$

Formel 4: Berechnung Touch-Point mittels zwei Stützpunkten

Figur 4 zeigt eine schematische Darstellung des Motorstroms des Aktuators gemäß einer weiteren Ausführungsform. Die Darstellung und das dahinter stehende Vorgehen entsprechen im Wesentlichen den Ausführungen zu Figur 3. In Figur 3 wird jedoch nur eine Extrapolation aufgrund zweier Wertepaare ($x_1/y_1$, $x_2/y_2$) der Größen Motorstrom (I) und Zeit (t) durchgeführt. Im Gegensatz hierzu werden in Figur 4 drei Extrapolationen durchgeführt, bzw. gezeigt. Hierzu werden zu den definierten Stromwerten $y_{1a}$, $y_{1b}$, $y_{1c}$, $y_{2a}$, $y_{2b}$, $y_{2c}$ die jeweiligen Zeitwerte $x1_a$, $x_{1b}$, $x_{1c}$, $x_{2a}$, $x_{2b}$, $x_{2c}$ ermittelt. Im Anschluss wird eine Extrapolation auf Basis der Wertepaare $y_{1a}/x_{1a}$ und $y_{2a}/x_{2a}$, sowie eine Extrapolation auf Basis der Wertepaare $y_{1b}/x_{1b}$ und $y_{2b}/x_{2b}$, sowie eine Extrapolation auf Basis der Wertepaare $y_{1c}/x_{1c}$ und $y_{2c}/x_{2c}$ durchgeführt. Als Referenzzeitwert wird jeweils der Zeitwert $x_R$ angesetzt, wenn die extrapolierte Gerade den Referenzstromwert $y_R$ (in diesem Fall den angenommenen Leerlaufstrom $I_0$) erreicht. Im Anschluss erfolgt eine Mittelung der berechneten Referenzzeitwerte $x_{Ra}$ (Extrapolation durch $y_{1a}/x_{1a}$ und $y_{2a}/x_{2a}$ auf $y_R$), $x_{Rb}$ (Extrapolation durch $y_{1b}/x_{1b}$ und $y_{2b}/x_{2b}$ auf $y_R$) und $x_{Rc}$ (Extrapolation durch $y_{1c}/x_{1c}$ und $y_{2c}/x_{2c}$ auf $y_R$) um den gemittelten Referenzstromwert $x_R$ zu berechnen und den Referenzpunkt $y_R/x_R$ abzuschätzen.

**Patentansprüche**

1.  Verfahren zum Betreiben einer automatisierten Feststellbremse (13) für ein Kraftfahrzeug mit wenigstens einer Bremsvorrichtung (1) mit einem Bremskolben (5), wobei die Feststellbremse (13) den Bremskolben (5) zwischen einer bremsmoment-freien Ruheposition und einer bremsmoment-beaufschlagten Bremsposition in Bezug auf eine Bremsscheibe (7) mittels eines Aktuators (2) verstellt, wobei während eines Lösevorgangs der Feststellbremse (13) ein Referenzpunkt ermittelt wird, an welchem der Bremskolben (5) in einer im Wesentlichen bremsmomentfreien Position zwischen dessen Ruheposition und Bremsposition lokalisiert ist, **dadurch gekennzeichnet, dass** eine Abschätzung des Referenzpunktes unter Berücksichtigung einer Extrapolation einer den Lösevorgang beschreibenden Größe (I, t) erfolgt.

2.  Verfahren nach Anspruch 1, **dadurch gekennzeichnet, dass** eine Abschätzung des Referenzpunktes unter Berücksichtigung einer linearen Extrapolation der den Lösevorgang beschreibenden Größe (I, t) erfolgt.

3. Verfahren nach einem der vorhergehenden Ansprüche, **dadurch gekennzeichnet, dass** die den Lösevorgang beschreibende Größe (I, t) den Klemmkraftabbau repräsentiert.

4. Verfahren nach einem der vorhergehenden Ansprüche, **dadurch gekennzeichnet, dass** der Lösevorgang durch wenigstens ein Wertepaar ($y_l/x_t$) zweier Größen (I, t) beschrieben wird, wobei insbesondere als Wertepaar ($y_l/x_t$) die Größen berücksichtigt werden:

   - ein Stromwert (I) der Feststellbremse (13) und
   - eine Größe der Feststellbremse (13), die die aktuelle Position des Bremskolbens (5) beschreibt.

5. Verfahren nach Anspruch 4, **dadurch gekennzeichnet, dass** als Wertepaar ($y_l/x_t$) die Größen berücksichtigt werden:

   - ein Stromwert (I) der Feststellbremse (13) und
   - ein Zeitwert (t) einer Ansteuerung des Aktuators (2)

6. Verfahren nach einem der Ansprüche 4 bis 5, **dadurch gekennzeichnet, dass** zur Ermittlung des Wertepaars ($y_l/x_t$)

   - zu definierten Zeitwerten (t) die korrespondierenden Stromwerte (I) ermittelt werden oder
   - zu definierten Stromwerten (I) die korrespondierenden Zeitwerte (t) ermittelt werden.

7. Verfahren nach einem der Ansprüche 4 bis 6, **dadurch gekennzeichnet, dass** die Abschätzung des Referenzpunktes unter Berücksichtigung einer linearen Extrapolation zweier Wertepaare ($y_1/x_1$, $y_2/x_2$) der den Lösevorgang beschreibenden Größen (I, t) erfolgt.

8. Verfahren nach einem der vorhergehenden Ansprüche, **dadurch gekennzeichnet, dass** als Referenzpunkt die Position angesetzt wird, an welcher die Extrapolation der den Lösevorgang beschreibenden Größe (I, t) einen definierten Referenzwert aufweist.

9. Verfahren nach einem der vorhergehenden Ansprüche, **dadurch gekennzeichnet, dass** die Abschätzung des Referenzpunktes unter Berücksichtigung eines Leerlaufstroms ($I_0$) des Aktuators (2) erfolgt, wobei insbesondere der Leerlaufstrom (Io) im Vorfeld der Abschätzung des Referenzpunktes bestimmt wird durch

   - einen definierten festen Parameter und/oder
   - einen gemessenen Parameter und/oder
   - einen definierten variablen Parameter, wobei insbesondere auf Basis von unterschiedlichen ermittelten Betriebsbedingungen ein anderer definierter Parameter berücksichtigt wird.

10. Verfahren nach Anspruch 9, **dadurch gekennzeichnet, dass** nach einem vollständigen Abbau des Bremsmoments ein tatsächlich bestehender Leerlaufstrom ($I_0$) gemessen wird, und insbesondere eine Korrektur des abgeschätzten Referenzpunktes vorgenommen wird, wenn der im Vorfeld der Abschätzung des Referenzpunktes bestimmte Leerlaufstrom (Io) von dem tatsächlich bestehenden Leerlaufstrom abweicht.

11. Verfahren nach einem der vorhergehenden Ansprüche, **dadurch gekennzeichnet, dass** zur Abschätzung des Referenzpunktes mehrere Extrapolationen einer den Lösevorgang beschreibenden Größe (I, t) erfolgen, insbesondere, dass ein Mittelwert mehrerer linearer Extrapolationen zweier Wertepaare ($y_1/x_1$, $y_2/x_2$) der den Lösevorgang beschreibenden Größen (I, t) gebildet wird.

12. Verfahren nach einem der vorhergehenden Ansprüche, **dadurch gekennzeichnet, dass** der abgeschätzte Referenzpunkt als Eingangsgröße für ein Berechnungsverfahren zur Ermittlung des exakten Referenzpunktes eingesetzt wird.

13. Vorrichtung (1, 9, 13), die eingerichtet ist, das Verfahren gemäß einem der Ansprüche 1 bis 12 auszuführen.

14. Computerprogramm, das dazu eingerichtet ist, das Verfahren gemäß einem der Ansprüche 1 bis 12 auszuführen.

15. Maschinenlesbares Speichermedium, auf dem das Computerprogramm nach Anspruch 14 gespeichert ist.

**Claims**

1. Method for operating an automated parking brake (13) for a motor vehicle having at least one brake device (1) with a brake piston (5), wherein the parking brake (13) adjusts the brake piston (5) between an idle position which is free of braking torque and a braking position in which a braking torque is applied, with respect to a brake disk (7) by means of an actuator (2), wherein during a process of releasing the parking brake (13) a reference point is determined at which the brake piston (5) is located at a position at which it is essentially free of braking torque, between its idle position and braking position, **characterized in that** the reference point is estimated taking into account an extrapolation of a variable (1, t) which describes the release process.

2. Method according to Claim 1, **characterized in that** the reference point is estimated taking into account a linear extrapolation of the variable (1, t) which describes the release process.

3. Method according to one of the preceding claims, **characterized in that** the variable (1, t) which describes the release process represents the reduction in clamping force.

4. Method according to one of the preceding claims, **characterized in that** the release process is described by at least one value pair $(y_1/x_t)$ of two variables (1, t), wherein in particular the variables are taken into account as a value pair $(y_1/x_t)$:

   - a current value (1) of the parking brake (13) and
   - a variable of the parking brake (13) which describes the current position of the brake piston (5).

5. Method according to Claim 4, **characterized in that** the variables are taken into account as a value pair $(y_1/x_t)$:

   - a current value (1) of the parking brake (13) and
   - a time value (t) of actuation of the actuator (2).

6. Method according to one of Claims 4 to 5, **characterized in that** in order to determine the value pair $(y_1/x_t)$

   - the corresponding current values (1) are determined at defined time values (t), or
   - the corresponding time values (t) are determined at defined current values (1).

7. Method according to one of Claims 4 to 6, **characterized in that** the reference point is estimated taking into account a linear extrapolation of two value pairs $(y_1/x_1, y_2/x_2)$ of the variables (1, t) which describe the release process.

8. Method according to one of the preceding claims, **characterized in that** the position at which the extrapolation of the variable (1, t) which describes the release process has a defined reference value is assumed as the reference point.

9. Method according to one of the preceding claims, **characterized in that** the reference point is estimated taking into account an open-circuit current $(I_0)$ of the actuator (2), wherein in particular the open-circuit current $(I_0)$ is determined in advance of the estimation of the reference point, by means of

   - a defined fixed parameter and/or
   - a measured parameter and/or
   - a defined variable parameter, wherein in particular another defined parameter is taken into account on the basis of different determined operating conditions.

10. Method according to Claim 9, **characterized in that** after complete elimination of the braking torque an actually existing open-circuit current $(I_0)$ is measured, and in particular the estimated reference point is corrected if the open-circuit current $(I_0)$ determined in advance of the estimation of the reference point deviates from the actually existing open-circuit current.

11. Method according to one of the preceding claims, **characterized in that** in order to estimate the reference point a plurality of extrapolations of a variable (1, t) which describes the release process are carried out, in particular **in that** a mean value of a plurality of linear extrapolations of two value pairs $(y_1/x_1, y_2/x_2)$ of the variables (1, t) which describe the release process is formed.

**12.** Method according to one of the preceding claims, **characterized in that** the estimated reference point is used as an input variable for a calculation method for determining the precise reference point.

**13.** Device (1, 9, 13) which is configured to carry out the method according to one of Claims 1 to 12.

**14.** Computer program which is configured to carry out the method according to one of Claims 1 to 12.

**15.** Machine-readable storage medium in which the computer program according to Claim 14 is stored.

**Revendications**

**1.** Procédé permettant de faire fonctionner un frein de stationnement automatisé (13) pour un véhicule automobile, comprenant au moins un dispositif de freinage (1) doté d'un piston de frein (5), le frein de stationnement (13) ajustant le piston de frein (5) entre une position de repos sans couple de freinage et une position de freinage sollicité par un couple de freinage au moyen d'un actionneur (2) par rapport à un disque de frein (7), dans lequel, pendant une opération de desserrage du frein de stationnement (13), un point de référence est déterminé auquel le piston de frein (5) se trouve dans une position substantiellement sans couple de freinage entre la position de repos et la position de freinage de celui-ci, **caractérisé en ce qu'**une estimation du point de référence est effectuée en tenant compte d'une extrapolation d'une grandeur (I, t) décrivant l'opération de desserrage.

**2.** Procédé selon la revendication 1, **caractérisé en ce qu'**une estimation du point de référence est effectuée en tenant compte d'une extrapolation linéaire de la grandeur (I, t) décrivant l'opération de desserrage.

**3.** Procédé selon l'une quelconque des revendications précédentes, **caractérisé en ce que** la grandeur (I, t) décrivant l'opération de desserrage représente la réduction de la force de serrage.

**4.** Procédé selon l'une quelconque des revendications précédentes, **caractérisé en ce que** l'opération de desserrage est décrite par au moins une paire de valeurs ($y_1/x_t$) de deux grandeurs (I, t), dans lequel les grandeurs suivantes :

  - une valeur de courant (I) du frein de stationnement (13), et
  - une grandeur du frein de stationnement (13) qui décrit la position actuelle du piston de frein (5), sont prises en compte en particulier comme la paire de valeurs ($y_I/x_t$).

**5.** Procédé selon la revendication 4, **caractérisé en ce que** les grandeurs suivantes :

  - une valeur de courant (I) du frein de stationnement (13), et
  - une valeur de temps (t) d'un pilotage de l'actionneur (2),

sont prises en compte en particulier comme la paire de valeurs ($y_I/x_t$).

**6.** Procédé selon l'une quelconque des revendications 4 à 5, **caractérisé en ce que**

  - les valeurs de courant (I) correspondantes sont déterminées pour des valeurs de temps définies (t), ou
  - les valeurs de temps (t) correspondantes sont déterminées pour des valeurs de courant définies (I), afin de déterminer la paire de valeurs ($y_I/x_t$).

**7.** Procédé selon l'une quelconque des revendications 4 à 6, **caractérisé en ce que** l'estimation du point de référence est effectuée en tenant compte d'une extrapolation linéaire de deux paires de valeurs ($y_1/x_1$, $y_2/x_2$) des grandeurs (I, t) décrivant l'opération de desserrage.

**8.** Procédé selon l'une quelconque des revendications précédentes, **caractérisé en ce qu'**on spécifie comme point de référence la position à laquelle l'extrapolation de la grandeur (I, t) décrivant l'opération de desserrage présente une valeur de référence définie.

**9.** Procédé selon l'une quelconque des revendications précédentes, **caractérisé en ce que** l'estimation du point de référence est effectuée en tenant compte d'un courant à vide ($I_0$) de l'actionneur (2), dans lequel en particulier, le courant à vide ($I_0$) est déterminé préalablement à l'estimation du point de référence par

- un paramètre fixe défini, et/ou
- un paramètre mesuré, et/ou
- un paramètre variable défini, dans lequel en particulier, un autre paramètre défini est pris en compte sur la base de différentes conditions de fonctionnement déterminées.

10. Procédé selon la revendication 9, **caractérisé en ce qu'**après une réduction complète du couple de freinage, un courant à vide ($I_0$) réellement existant est mesuré, et en particulier une correction du point de référence estimé est effectuée, si le courant à vide ($I_0$) déterminé préalablement à l'estimation du point de référence diffère du courant à vide réellement existant.

11. Procédé selon l'une quelconque des revendications précédentes, **caractérisé en ce que** pour l'estimation du point de référence plusieurs extrapolations d'une grandeur (I, t) décrivant une opération de desserrage sont effectuées, en particulier **en ce qu'**une moyenne de plusieurs extrapolations linéaires de deux paires de valeurs ($y_1/x_1$, $y_2/x_2$) des grandeurs (I, t) décrivant l'opération de desserrage est formée.

12. Procédé selon l'une quelconque des revendications précédentes, **caractérisé en ce que** le point de référence estimé est utilisé comme grandeur d'entrée pour un procédé de calcul permettant de déterminer le point de référence exact.

13. Dispositif (1, 9, 13), qui est aménagé pour exécuter le procédé selon l'une quelconque des revendications 1 à 12.

14. Programme informatique, qui est aménagé pour exécuter le procédé selon l'une quelconque des revendications 1 à 12.

15. Support de stockage lisible par machine, sur lequel est stocké le programme informatique selon la revendication 14.

**Fig. 1**

EP 3 645 357 B1

# Fig. 2

Fig. 3

Fig. 4

**IN DER BESCHREIBUNG AUFGEFÜHRTE DOKUMENTE**

**In der Beschreibung aufgeführte Patentdokumente**

- DE 102016208583 A1
- DE 102005011267 A1